# EUROPÄISCHE PATENTANMELDUNG

(11) **EP 0 710 436 A1**
(43) Veröffentlichungstag der Anmeldung: **08.05.1996**
(21) Anmeldenummer: 95102727.5
(22) Anmeldetag: 25.02.1995
(51) Int. Cl.: A01D 27/00

(54) **Rübenheber**

(30) Priorität: 02.11.1994 DE 9417558 U; 03.11.1994 DE 9417596 U; 26.01.1995 DE 29501166 U
(71) Anmelder: Schäfer, Walter, D-53859 Niederkassel (DE)
(72) Erfinder: Schäfer, Walter, D-53859 Niederkassel (DE)
(74) Vertreter: Fechner, Joachim, Dr.-Ing.

(57) **Zusammenfassung**

Der Rübenheber mit einem oder mehreren in Reihe nebeneinander angeordneten Hebewerkzeugen und einem Reinigungsteil mit mehreren Siebsternrosten (5,7) ist dadurch gekennzeichnet, daß jedes Hebewerkzeug aus einem unter einem Anstellwinkel in dem Bereich von 15 bis 50° zur Horizontalen geneigten Hebeschar (1) besteht, das unterseitig auf einem Scharträger (2) angebracht ist, der im druckentlasteten Schattenbereich des Hebeschars (1) aus dem Erdreich herausgeführt ist. Mit dem erfindungsgemäßen Hebeschar (1) werden die Rüben praktisch ohne vorherige Erdpressung aus der Erde gehoben.

## Beschreibung

Die Erfindung betrifft einen Rübenheber mit einem oder mehreren in Reihe nebeneinander angeordneten Hebewerkzeugen und einem Reinigungsteil mit mehreren Siebsternrosten.

Die Hebewerkzeuge der bekannten Rübenheber üben zu Beginn des Hebevorgangs einen seitlichen Druck auf die die Rübe umgebenden Erde aus, so daß diese an die Rübe angepreßt wird, wodurch der Erdanhang verdichtet und vergrößert wird. Dadurch wird die anschließende Reinigung der Rübe erschwert. Ein weiterer Nachteil der bekannten Rodeschare ist der erhebliche Widerstand, den sie beim Vorschub im Erdreich erfahren.

Der vorliegenden Erfindung liegt demzufolge die Aufgabe zugrunde, einen Rübenheber zu schaffen, dessen Hebeschare die Rüben praktisch ohne vorherige Erdpressung aus der Erde heben. Insbesondere soll ein Rübenheber geschaffen werden, dessen Schare so arbeiten, daß der Erdanhang relativ locker sitzt, so daß er nach dem Heben der Rübe von selbst zur Seite abfällt oder in dem nachfolgenden Reinigungsteil der Maschine leicht von den Rüben getrennt werden kann. Ferner soll ein Rübenheber geschaffen werden, der die Rübe gegen minimalen Widerstand des die Rübe umgebenden Erdreichs hebt, so daß die Maschine leichtzügig ist. Weitere Vorteile ergeben sich aus der nachfolgenden Beschreibung.

Diese Aufgabe wird bei dem eingangs genannten Rübenheber erfindungsgemäß dadurch gelöst, daß jedes Hebewerkzeug aus einem unter einem Anstellwinkel in dem Bereich von 15 bis 50° zur Horizontalen geneigten Hebeschar besteht, der unterseitig auf einem Scharträger angebracht ist, der in dem druckentlasteten Schattenbereich des Hebeschars aus dem Erdreich herausgeführt ist.

Das Hebeschar des erfindungsgemäßen Rübenhebers besteht aus einer vorzugsweise ebenen Platte, die als schiefe Ebene unter die Rübenreihe gefahren wird, an der Rübenspitze angreift und bei ihrem Vorschub die Rübe vertikal nach oben hebt. Da das Hebeschar nur auf die Rübenspitze treffen soll, ist seine Breite gering, Sie liegt beispielsweise in dem Bereich von 2 bis 7 cm, vorzugsweise von 2,5 bis 4 cm. Die Scharlänge liegt in dem Bereich von 15 bis 30 cm. Die beidseitig der Rübenspitze mit angehobene Erdmasse ist gering. Die mit angehobene Erdmenge fällt nach dem Anheben beiderseits des Hebeschars von der Rübe ab, soweit sie nicht vom Wurzelgeflecht zunächst festgehalten wird. Der gesamte Widerstand beim Vortrieb wird im wesentlichen nur durch die Hebeschare erzeugt und ist durch dessen Neigung und geringe Größe und vor allem das senkrechte Heben der Rübe minimal. Der Scharträger liegt vollständig im Strömungsschatten des Schars und trägt deshalb nicht zum Widerstand bei.

Nach der bevorzugten Ausführungsform des Rübenhebers schließt sich an ein oder mehrere Hebeschare ein durch einen Hydraulikmotor angetriebener Siebsternrost an, dessen Stäbe im Außenbereich in einer Ebene liegen und im Innenbereich aufgebogen sind. Die Rüben werden von den Hebescharen bis auf das Niveau des Randes der Siebsternroste gehoben und dann auf die Siebsternroste übergeben. Durch die Aufbiegung der vorzugsweise paarweise gegeneinander rotierenden Siebsternroste werden die Rüben besser erfaßt und abtransportiert, so daß sich im Bereich der Zusammenführung der Rüben von zwei benachbarten Scharen keine Stauung ergibt. Zweckmäßigerweise sind die Stäbe der Siebsternroste im Innenbereich kegelförmig angeordnet. Dabei liegt der Abbiegewinkel der Stäbe am Übergang vom Außenbereich zum Innenbereich in dem Bereich von 10 bis 70° , vorzugsweise in dem Bereich von 20 bis 50° . Die so geformten Siebsternroste können mit der Bewegung der Rüben eine Reinigungswirkung auf die Rüben ausüben. Sie halten auch den Scharträger von Unkraut und dergl. frei.

Zweckmäßigerweise rotieren die Siebsternroste paarweise in entgegengesetzter Drehrichtung und überlappen sie sich im ebenen Außenbereich ihrer Stäbe. Durch die Siebsternroste werden die Rüben von einem oder mehreren Scharen zu einem Rübenstrom vereinigt.

Bei der bevorzugten Ausführungsform des Rübenhebers sind die Hydraulikmotoren der Siebsternroste durch nach oben weggeführte Halterungen gehalten. Diese Halterungen können als den Motor umgebende Rohrhalter ausgebildet sein, die an den Motor angeflanscht sind. Durch die nach oben geführten Motorhalterungen wird jede Beeinträchtigung des Rübenflußes auf den Siebsternrosten vermieden.

Nach der bevorzugten Ausführungsform der Erfindung liegt der Anstellwinkel der Hebeschare in dem Bereich von 20 bis 35° . Dadurch wird einerseits die Rübe senkrecht nach oben gedrückt, andererseits wird der vom Erdreich ausgeübte Widerstand beim Vorschub des Schars gering gehalten.

In weiterer Ausgestaltung der Erfindung ist jedes Hebeschar mit einer Überlastsicherung ausgestattet. Die Überlastsicherung verhindert beim Auftreffen des Hebeschars auf einen unhebbaren Widerstand, z.B. einen größeren Stein, eine Beschädigung der Maschine dadurch, daß das Hebeschar aus der Erde gehoben und dabei etwas vom Widerstand zurückgezogen wird. Zweckmäßigerweise ist hierzu der Scharträger an zwei Punkten pendelnd aufgehängt und gegen einen druckeinstellbaren Stickstoffzylinder in der Arbeitsstellung gehalten. Durch die Zwei-Punkt-Pendelaufhängung kann der Scharträger mit dem Schar aus der Rodestellung zurückbewegt und gleichzeitig angehoben werden, so daß der Widerstand überfahren werden kann. Der Scharträger wird durch den druckeinstellbaren Zylinder in der Arbeitsstellung gehalten. Nur bei Überschreiten des eingestellten Druckes infolge des Auftreffens auf den Widerstand kann der Scharträger mit dem Hebeschar nachgeben und die Rückzieh- und Hebebewegung ausführen. Nach Überwindung des Widerstands kehrt der Scharträger mit dem Schar selbsttätig in die Rodestellung zurück. Die Überlastsicherung kann auch durch eine Taschenführung des Scharträgers nach Anspruch 11 oder durch Scherbolzen nach Anspruch 12 erfolgen.

In weiterer Ausgestaltung der Erfindung wird zur Verbesserung der Reinigungswirkung an den über die Siebsterne geförderten Rüben vorgesehen, daß die Stäbe des Siebsterns in ihrer gesamten Länge auf einer Kegelmantenfläche angeordnet sind, die sich zu der Seite des Siebsternantriebs öffnet. Die Förder- und Reinigungsfläche des Siebsterns steigt somit zum Umfang hin an. Die auf den Siebstern aufgegebenen Rüben werden durch die wirksamen Zentrifugalkräfte gewissermaßen bergan nach außen gedrückt so daß im Vergleich zu einem ebenen Siebstern durch Reibung und Scherung eine Intensivierung der Rübenreinigung erreicht wird. Dieser Effekt wird ohne erhöhte Beschädigung der Rüben erreicht, da die Drehzahl des Siebsterns nicht oder nur wenig erhöht werden muß.

Bei der bevorzugten Ausführungsform des erfindungsgemäßen Siebsterns liegt der Neigungswinkel α des Kegelmantels zu der senkrecht zur Drehachse des Sterns stehenden Ebene in dem Bereich von 0°<α<50°. Der bevorzugte Winkel liegt in einem Bereich von 10 bis 40°. Bei dieser Neigung wird neben der Reinigung auch eine gute Förderung der Rüben erreicht.

Zweckmäßigerweise sind die Stäbe des Siebsterns gekrümmt. Da die auf die Rüben wirkenden Zentrifugalkräfte geradlinig nach außen gerichtet sind, bewegen sich die Rüben schräg zu den gekrümmten Stäben, wodurch die Abscherung des Erdanhangs verbessert wird.

Zweckmäßigerweise sind die Enden der gekrümmten Stäbe des Siebsterns unverbunden, so daß die Übergabe der Rüben an dem Umfang des Siebsterns auf den nächsten Siebstern nicht durch einen Umfangsstab behindert wird.

In weiterer Ausgestaltung der Erfindung ist zur Vermeidung von Rübenverlusten vor dem Überlappungsbereich der beiden Aufnahme-Siebsternevorgesehen, daß in dem Zwickel vor dem Überlappungsbereich der beiden Aufnahme-Siebsterne der bzw. jeder Gruppe ein drittes Hebeschar angeordnet. Anders als bei der oben genannten Ausführungsform mit zwei Hebescharen arbeiten hier drei Hebeschare mit den beiden Aufnahme-Siebsternen zusammen. Das in dem Zwickel vor dem Überlappungsbereich der beiden Aufnahme-Siebsterne angeordnete dritte Hebeschar hat dabei nicht nur die Funktion, eine Rübenreihe zu roden, sondern auch zu verhindern, daß die von den beiden anderen Hebescharen gerodeten, zur Mitte transportierten Rüben bei einer Rübenstauung nach vorne gedrückt werden und dann auf den Boden fallen können. Dies wird verhindert, weil durch die Rodung der mittleren Reihe immer Rübendruck von vorne kommt und deshalb eine Rübenverschiebung gegen diesen Druck nach vorne über die Siebsternkante nicht möglich ist.

Nach der bevorzugten Ausführungsform des erfindungsgemäßen Rübenhebers sind alle drei Hebeschare jeder Gruppe unter einem Anstellwinkel in dem Bereich von 15 bis 50° zur Horizontalen geneigt und ist jedes Hebeschar unterseitig auf einem Scharträger angebracht, der im druckentlasteten Schattenbereich des Hebeschars aus dem Erdreich herausgeführt ist. Die Hebeschare des erfindungsgemäßen Rübenhebers bestehen aus einer vorzugsweise ebenen Platte die als schiefe Ebene unter die Rübenreihe gefahren wird, an der Rübenspitze angreift und bei ihrem Vorschub die Rübe vertikal nach oben drückt. Da das Hebeschar nur auf die Rübenspitze treffen soll, ist seine Breite gering. Sie liegt beispielsweise in dem Bereich von 2 bis 7 cm, vorzugsweise von 2,5 bis 4 cm. Die Scharlänge liegt im Bereich von 15 bis 30 cm. Die beidseitig der Rübenspitze mit angehobene Erdmasse ist gering. Die mit angehobene Erdmenge fällt nach dem Anheben beiderseits des Hebeschars von der Rübe ab, soweit sie nicht vom Wurzelgeflecht zunächst festgehalten wird. Der gesamte Widerstand beim Vortrieb wird im wesentlichen nur durch die Hebeschare erzeugt und ist durch deren Neigung und geringe Größe und vor allem das senkrechte Heben der Rübe minimal. Der Scharträger liegt ständig im Strömungsschatten des Schars und trägt deshalb nicht zum Widerstand bei.

Nach der bevorzugten Ausführungsform der Erfindung sind die vor den Aufnahme-Siebsternen angeordneten Hebeschare in Querrichtung verstellbar. Ihr Abstand von dem mittleren, in dem Zwickel angeordneten Hebeschar kann somit an den Reihenabstand der Rüben angepaßt werden.

Vorzugsweise sind wenigstens die Scharträger der beiden äußeren Hebeschare an ihren hinteren Enden durch Parallelgestänge an einer Schiebebuchse aufgehängt, die auf einem Querholm verschiebbar und auf ihm feststellbar sind. Durch diese Aufhängung des Scharträgers mittels eines Parallelgestänges kann der Scharträger mit dem Schar aus der Rodestellung zurückbewegt und gleichzeitig angehoben werden, so daß ein zu großer Widerstand, z.B. durch einen Stein, überfahren werden kann. Durch die Verschiebung der Schiebebuchse mit dem Gestänge und Scharträger auf dem Querholm kann der Scharabstand dem Reihenabstand der Rüben angepaßt werden. Zweckmäßigerweise ist der Querholm hinter dem Reinigungsteil, also insbesondere hinter den Siebsternen angeordnet. Unter den Siebsternen befinden sich daher nur die in Fahrrichtung liegenden Scharträger, so daß das Festhalten und die Mitnahme von Pflanzenmaterial durch quer zur Fahrtrichtung verlaufende Maschinenteile unterhalb der Siebsterne weitgehend vermieden wird. Zweckmäßigerweise ist jeder Scharträger oder sein Parallelgestänge durch einen druckeinstellbaren Strömungsmittelzylinder in der Rodestellung abgestützt. Der Scharträger mit dem Schar kann daher nach hinten ausweichen, wenn das Hebeschar auf einen festen Widerstand trifft. Dabei wird das Hebeschar mit dem Scharträger auch angehoben, so daß der feste Widerstand (Stein) überfahren werden kann.

Nach der bevorzugten Ausführungsform des erfindungsgemäßen Rübenhebers ist jede Gruppe aus den drei Hebescharen und den Siebsternen durch vier auf dem Erdboden laufende Tasträder tiefenmäßig individuell geführt. Durch die individuelle Tiefenführung jeder einzelnen Gruppe ist eine ausgezeichnete Anpassung an Unebenheiten möglich. Je ein Tastrad läuft in dem Zwischenraum zwischen zwei Hebescharen der Gruppe, jeweils ein Tastrad läuft außenseitig der Dreiergruppe der Hebenschare. Durch diese Vierpunkt-Bodenabtastung können örtliche Vertiefungen, z.B. Treckerfahrspuren, bei der Tiefenführung ausgeschaltet werden, sodaß Rodungsfehler vermieden werden.

Bei einer anderen Ausführungsform des erfindungsgemäßem Rübenhebers ist jede Gruppe aus den drei Hebescharen und den Siebsternen durch drei Schleifkufen tiefenmäßig individuell geführt.

Nach einer weiteren bevorzugten Ausführungsform des erfindungsgemäßen Rübenhebers ist an dem hinteren Ende des Scharträgers ein pyramidenförmiger Kopf ausgebildet, der in der Rodestellung des Hebeschars in einem pyramidenförmigen, sich nach hinten öffnenden Gehäuse allseitig anliegend gehalten ist, und daß der Scharträgerkopf durch ein nachgiebiges Rückstellmittel in dieser Anlagestellung abgestützt ist. Auf diese Weise wird eine weitere Überlastsicherung geschaffen, die das Hebeschar beim Auftreffen auf einen festen Widerstand zurückführt und anhebt, so daß der Widerstand überfahren werden kann. Nach dem Überfahren des Widerstandes wird der Scharträger das Hebeschar durch das Rückstellmittel wieder in die Rodestellung bewegt, die durch die Anlage des pyramidenförmigen Scharträgerkopfes an dem pyramidenförmigen Gehäuse bestimmt ist. Bei einer Ausführungsform dieses Rübenhebers ist das Rückstellmittel ein mit Strömungsmittel gefüllter Faltenbalg.

In weiterer Ausgestaltung dieser Ausführungsform ist das Hebeschar auf der Oberseite des Scharträgers schwenkbar angelenkt und durch einen Scherbolzen in seiner Lage fixiert. Beim Auftreffen auf einen festen Gegenstand kann der Scherbolzen abgeschert werden, so daß das Hebeschar auf dem Scharträger nach oben oder unten Ausschwenken kann.

Bei einer weiteren Ausführungsform des erfindungsgemäßen Rübenhebers besteht das Hebeschar aus einer gewölbten und schraubenförmig gebogenen Platte, so daß die Rübe von dem Hebeschar schräg zur Seite abgelegt wird. Auch bei dieser Ausführungsform ist das Hebeschar unterseitig auf einem Scharträger angebracht, der im druckentlasteten Schattenbereich des Schars aus dem Erdreich herausgeführt ist. Die Hebeschare können in Gruppen angeordnet sein, und die Hebeschare einer Gruppe können in der gleichen Richtung schraubenförmig gebogen sein, so daß sie die Rüben zur gleichen Seite hin ablegen. Eine solche Gruppe kann z.B. zwei, drei oder vier Hebeschare umfassen. Wenn ein Rübenheber zwei solche Gruppen hat, sind die Hebeschare der beiden Gruppen in unterschiedliche Richtungen schraubenförmig gebogen, so daß sich die beim Roden auftretenden Querkräfte kompensieren. Zweckmäßigerweise sind hinter den Hebescharen querliegende Wendelwalzen angeordnet, an die sich ein Transportband anschließt. Die Wendelwalzen führen die aufgenommenen Rüben zur Mitte und dann nach hinten auf das sich anschließende Transportband. Bei mehr als drei Hebescharen in Reihe sind die Wendelwalzen zweckmäßigerweise geteilt, so daß eine Wendelwalzengruppe oder die beiden außenliegenden Wendelwalzengruppen hochgeklappt werden können, so daß der Rübenheber dann die für den Straßentransport vorgeschriebene Maximalbreite nicht übersteigt.

Generell kann jeder erfindungsgemäße Rübenheber, der mehr als drei Hebeschare in Reihe hat, so ausgebildet sein, daß eine oder beide Seitenteile des Rübenhebers hochklappbar sind, so daß der Rübenheber für den Straßentransport geeignet ist.

Die Erfindung wird nachfolgend an Hand der Zeichnung näher beschrieben. Es zeigen
Figur 1 die Seitenansicht der für die Erfindung wesentlichen Teile einer ersten Ausführungsform des Rübenhebers;
Figur 2 die Draufsicht des in Figur 1 gezeigten Rübenhebers wobei jedoch als Überlastsicherung anstelle der Zwei-Punkt-Pendelaufhängung eine Taschenführung des Scharträgers dargestellt ist;
Figur 3 eine Seitenansicht des Siebsterns des Rübenhebers in schematischer Darstellung;
Figur 4 die Draufsicht auf den in Figur 3 gezeigten Siebstern;
Figur 5 die Draufsicht auf eine Gruppe einer zweiten Ausführungsform des erfindungsgemäßen Rübenhebers mit drei Hebescharen in schematischer Darstellung; und
Figur 6 die Seitenansicht der Vorrichtung nach Figur 5 in schematischer Darstellung;
Figur 7 eine Seitenansicht einer weiteren Ausführungsform der Überlastsicherung;
Figur 8 einen Schnitt nach der Linie VIII-VIII der Figur 7, wobei der Scharträgerkopf weggelassen ist;
Figur 9 die Draufsicht einer weiteren Ausführungsform des erfindungsgemäßen Rübenhebers unter Benutzung einer zweiten Ausführungsform des Hebeschars;
Figur 10 die Abwicklung der zweiten Ausführungsform des Hebeschars; und
Figur 11 das Hebeschar der zweiten Ausführungsform in perspektivischer Darstellung.

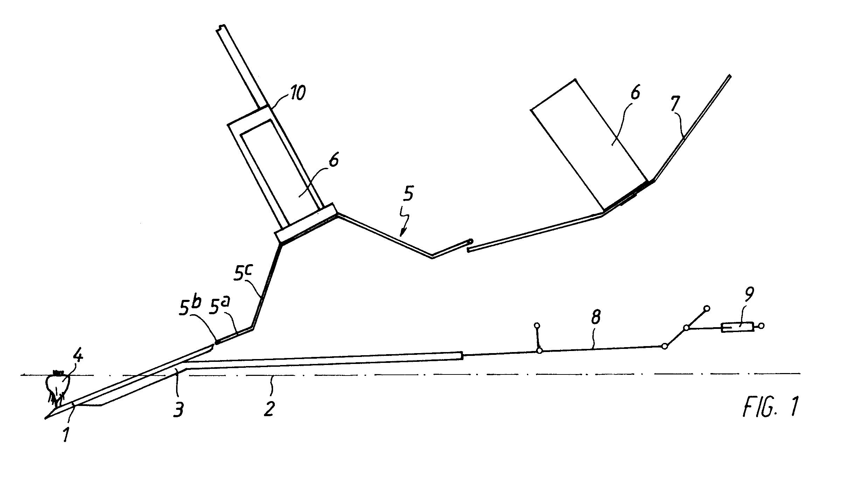

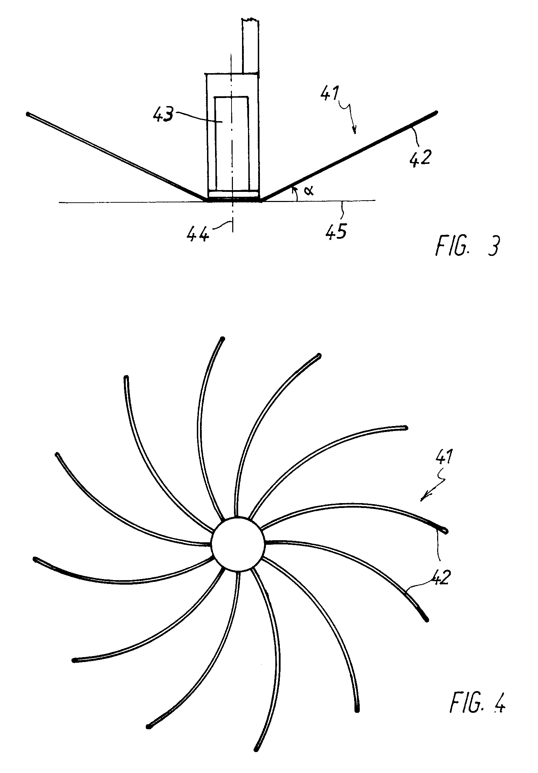

Nach den Fig. 1 und 2 hat die dargestellte Ausführungsform des Rübenhebers zwei längliche plattenförmige Hebeschare 1, die unter einem Winkel von 22° zur Horizontalen 2 von jeweils einem Scharträger 3 gehalten werden. Das Hebeschar 1 wird als schiefe Ebene von unten gegen die Spitze des Rüben 4 gefahren und hebt die Rüben senkrecht aus dem Erdreich. Der Erdanhang ist gering, da keine Erdpressung von der Seite gegen die Rübe erfolgt und die mitgehobene Erde beiderseits des Hebeschars abfallen kann.

An die Hinterkante der Schare 1 schließt sich je ein geschlossener Siebstern 5 an, der durch einen Hydraulikmotor 6 angetrieben wird. Die Außenteile 5^{a} der Stäbe der Siebsterne verlaufen radial und liegen zusammen mit dem Siebsternring 5^{b} in einer Ebene. Der innere Teil 5^{c} der Siebsternstäbe ist unter einem Winkel von etwa 20 bis 60° nach oben abgewinkelt, wobei dieser Winkel zwischen dem Innen- und Außenbereich der Stäbe auch anders sein kann. Die einem oder mehreren benachbarten Hebescharen 1 zugeordneten Siebsterne 5 rotieren gegenläufig, so daß die von den beiden Hebescharen 1 aufgenommenen und auf ihre Siebsterne 5 übergebenen Rüben zu einem Rübenstrom zusammengeführt werden. Dieser Rübenstrom (nicht dargestellt) wird anschließend von einem dritten größeren Siebsternrost 7 übernommen, dessen Stäbe auf einer umgekehrten Kegelflache liegen und keinen Außenring tragen. Der Winkel α zu der zur Achse senkrechten Ebene kann in dem Bereich von mehr als 0 bis 40° liegen.
Aus Figur 2 ist ersichtlich, daß sich die ebenen Bereiche der Siebsterne 5 und 6 überlappen, wodurch ein sicherer Abtransport der Rüben gewährleistet wird. Auch die nach oben abgewinkelten Bereiche 5^{c} der Siebsterne begünstigen die Erfassung der Rüben und ihren Transport.

Um den Rübentransport auf den Siebsternen 5 nicht durch Halterungen der Hydraulikmotoren 6 zu beeinträchtigen, sind diese Motoren in rohrförmigen Halterungen 10 untergebracht, die senkrecht zu den Siebsternen 5 nach oben weggehen und damit außerhalb des Bewegungsbereichs der Rüben liegen.

Die Hebeschare 1 sind alle mit einer Überlastsicherung ausgestattet, die beim Auftreffen des Schars auf einen unbeweglichen Widerstand anspricht und das Hebeschar 1 etwas von dem Widerstand zurückfährt und über das Bodenniveau 2 hebt. Nach dem Überfahren des Widerstands geht das Hebeschar automatisch in die Rodestallung zurück. Diese Überlastsicherung wird durch eine Zwei-Punkt-Pendelaufhängung 8 des Scharträgers 2 erreicht, die in Figur 1 mit ihren Gelenkpunkten nur schematisch dargestellt ist. Es ist ersichtlich, daß das Gestänge bei einem zu hohen Widerstand, der an dem Stickstoffbehälter 9 einstellbar ist, in diesen Behälter zurückfährt und dabei das Hebeschar etwas zurückfährt und angehoben wird.

In der Zeichnung wurde nur ein Rübenheber mit zwei Hebescharen dargestellt. Der Heber kann jedoch eine größere Anzahl von Hebescharen, z.B. ein bis sechs Schare haben. Der Rübenheber ist besonders für die Rodung von Zuckerrüben geeignet, aber auch für andere Rüben- oder Wurzelfrüchte, wie Zichorie, Chicorée und Porree.

Das hier beschriebene und dargestellte Rodesystem mit Hebescharen, Aufnahme- und Reinigungssiebsternen wird als System "Maulwurf" bezeichnet.

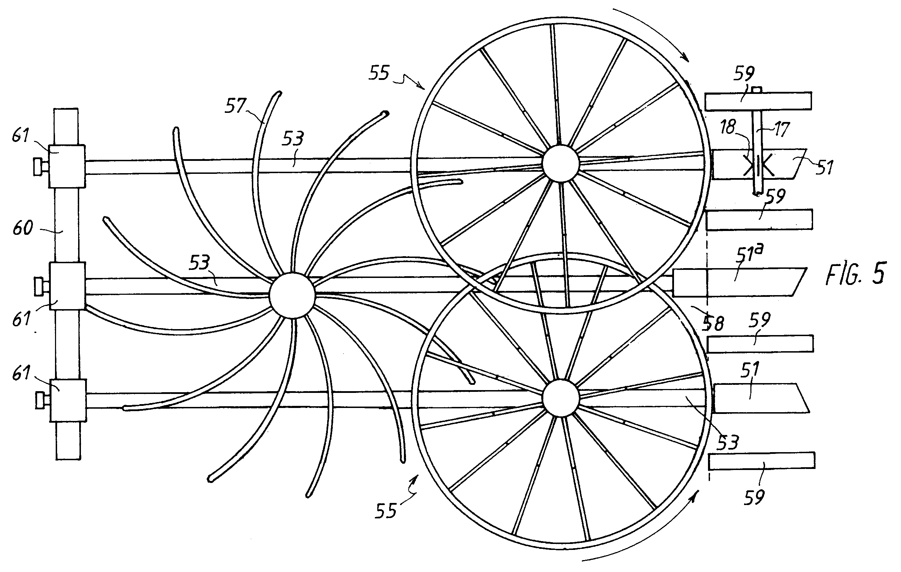

Nach den Figuren 3 und 4 hat der Siebstern Stangen 42, die auf einer Kegelmantelfläche verlaufen und in der Draufsicht gekrümmt sind. Die Kegelmantelfläche ist zur Seite des Siebsternantriebs 43 hin offen. Sie ist zu der zur Drehachse 44 des Siebsterns senkrecht stehenden Ebene 45 unter einem Winkel α von etwa 25° geneigt. Die Drehrichtung der Siebsterne 7,57 (Fig. 2 bzw. 5) kann in Abhängigkeit von dem Reinigungsweg der Rüben in oder entgegen der Uhrzeigerdrehrichtung gewählt werden. Die Stangen dieser Siebsterne sind dann geradlinig ausgebildet.

Bei der Förderung der Rüben über die erfindungsgemäßen Siebsterne 41 entsteht durch die Neigung der Siebsternstäbe eine gegen die Stäbe 42 gerichtete Komponente der Zentrifugalkraft, die einen erhöhten Andruck der Rüben an den Siebstern 41 bzw. seinen Stangen 42 und damit eine intensivere Reibung und Scherung der Rübe mit der anhängenden Erde an den Stäben bewirkt. Im Ergebnis werden daher die Rüben auf einer Siebsternstrecke mit den erfindungsgemäßen Siebsternen intensiver vom Erdanhang befreit, ohne daß die Rüben selbst stärker als bisher beschädigt werden oder höhere Bruchverluste erleiden.

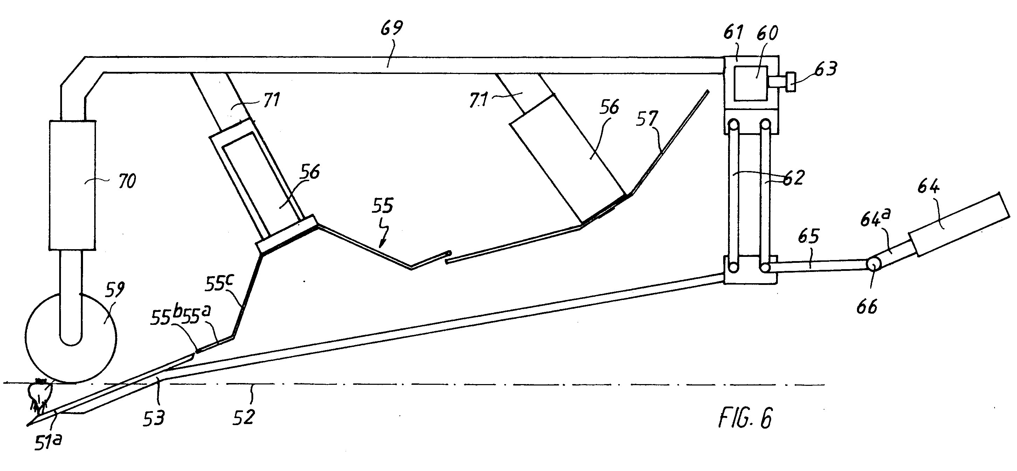

Nach Figur 5 umfaßt die dargestellte Gruppe des Rübenhebers zwei Aufnahme-Siebsterne 55 die sich im mittleren Bereich überlappen, und sich nach hinten und zur Seite anschließende größere Siebsternroste 57. Vor den beiden Aufnahme-Siebsternen 55 ist je ein Rübenhebeschar 51 angebracht, dessen Ausbildung und Lage zur Erdoberfläche aus Figur 6 ersichtlich ist. In dem durch die Siebsternringbögen und die Erdoberfläche gebildeten Zwickel 58 ist ein drittes Hebeschar 51^{a} angebracht, das ebenso wie die Schare 51 eine Rübenreihe rodet und auf die Aufnahme-Siebsterne 55 schiebt, die in Pfeilrichtung rotieren. Das mittlere Hebeschar 51^{a} und der durch ihn auf die Siebsterne 55 geförderte Rübenstrom haben außerdem die Aufgabe, zu verhindern, daß die in Überlappungsbereich der Aufnahme-Siebsterne 55 sich sammelnden Rüben nach vorne gedrückt werden und von den Siebsternen 55 in den Zwickel 58 nach unten auf den Boden fallen und auf ihm liegen bleiben. Die in Figur 5 dargestellte Gruppe hat außerdem vier Tasträder 59, von denen zwei zwischen den Hebescharen 51 und 51^{a}bzw. deren Trägern 53 angeordnet sind und zwei außenseitig der äußeren Hebeschare 51. Die Hebeschare 51,51^{a} sind über ihre Träger an einem Querholm 60 angebracht und auf diesem mittels Schiebebuchsen 61 verschiebbar befestigt, wie an Hand der Figur 6 noch erläutert wird.

Aus dem in Figur 6 gezeigten Längsschnitt der Dreiergruppe ist ersichtlich, daß das die Rübe 4 uncerfahrende Hebeschar 51^{a} (in gleicher Weise wie die Hebeschare 51) auf der Oberseite des vorderen Endes eines Scharträgers 53 angebracht ist, das im erddruckentlasteten Bereich hinter den Hebeschar 51^{a} liegt. Der Scharträger 53 erstreckt sich unter den Siebsternen 55,57 mit zunehmendem Bodenabstand nach hinten. Das hintere Ende des Scharträgers ist mittels eines Doppelgestänges 62 an der Schiebehülse 61 aufgehängt, die auf dem Querholm 60 verschieblich ist. Die Position der Schiebehülse 61 auf dem Querholm 60 kann mittels Schraube 63 festgestellt werden. Auf diese Weise können die Hebeschare 51, 51^{a} in Querrichtung verschiedenen Abständen der Rübenreihen angepaßt werden. Es ist auch möglich, das mittlere Schar 51^{a} fest anzuordnen und nur die beiden äußeren Schare 51 verschiebbar anzuordnen.

Die Pendelaufhängung des Scharträgers 53 mittels Doppelgestänge 62 ist durch eine Kolben/Zylinder-Einheit 64 abgestützt, die mittels Gestänge 65 den Scharträger 52 mit den Hebeschar in der Rodeposition hält. DieKolben/Zylinder-Einheit 64 stellt zugleich eine Überlastsicherung dar. Fährt das Hebeschar 51^{a}, 51 einen unbeweglichen Widerstand an, z.B. einen größeren Stein, kann die Kolbenstange 64^{a} in den Kolben zurückfahren, so daß auch das Hebeschar 51^{a},51 in Bezug auf die Maschine zurückfährt und dabei angehoben wird, so daß das Schar diesen Widerstand überfahren kann. Die Kolben/Zylinder-Einheit 64,64^{a} kann stationär angebracht sein. Durch ein Kugelgelenk 66 zwischen der Kolbenstange 64^{a} und dem Gestänge 65 ist es trotzdem möglich, den Scharträger 53 in Querrichtung im Bereich weniger cm zu verschieben, ohne daß dadurch die Abstütz- und Überlastsicherungsfunktion der Kolben/Zylinder-Einheit 64,64^{a} beeinträchtigt wird.

Figur 5 zeigt auch einen Teil der die Tasträder 59 tragenden Welle 17, die oberhalb der Hebeschare 51,51^{a} Paddel 18 trägt, die die Bewegung der gerodeten Rüben auf den Hebescharen in Richtung auf die Siebsterne 55 unterstützen.

Figur 6 zeigt schematiscb die Aufhängung eines Tastrades 59 an einem Gestänge 69, das an dem Querholm 60 angebracht ist. Sowohl die Tasträder 59 als auch die Motoren 56 sind über Federbeine 70 bzw. 71 an dem Gestänge aufgehängt.

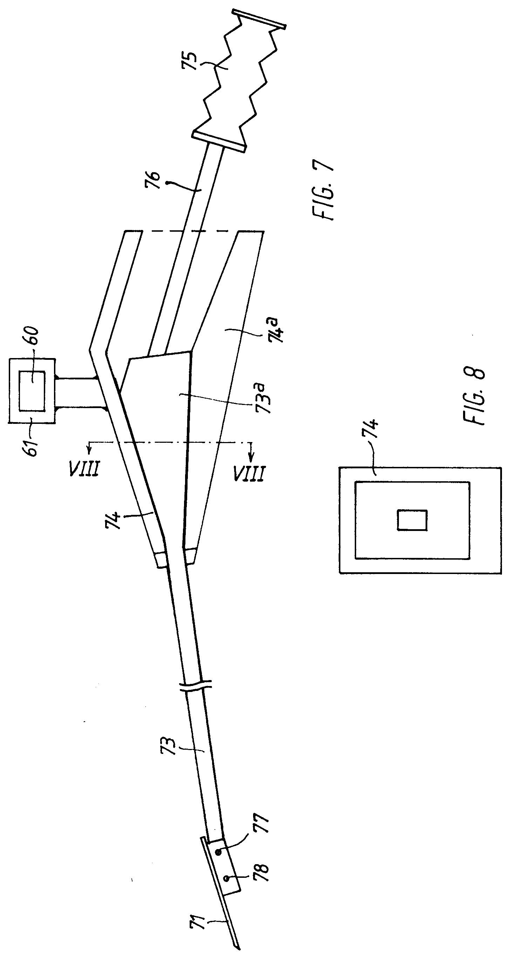

Bei der in den Figuren 7 und 8 dargestellten Ausführungsform der Überlastsicherung des Hebeschars ist an dem hinteren Ende des Scharträgers 73 ein pyramidenförmiger Scharträgerkopf 73^{a} angeformt, der einem pyramidenförmigen Gehäuse 74 innenseitig anliegt, wenn das Hebeschar 71 in der Rodestellung ist. Das Gehäuse 74 ist analog der in Figur 6 gezeigten Ausführungsform der Überlastsicherung mittels einer angesetzten Schiebebuchse 61 auf einem Querholm 60 verschiebbar und auf ihm feststellbar. Der Scharträgerkopf 73^{a} ist rückseitig über eine Stange 76 mit einem als Rückstellmittel 75 dienenden Faltenbalg verbunden, der den Kopf 73^{a} in der in Figur 7 gezeigten Lage hält. Beim Auftreffen des Hebeschars 71 auf einen festen Widerstand kann der Scharträger 73 mit dem Kopf 73^{a} und dem Hebeschar 71 nach hinten ausweichen. Bei dieser Ausführungsform ist das Hebeschar 71 an dem Scharträger 73 mittel eines Gelenkbolzens 77 schwenkbar gelagert und außerdem durch einen Scherbolzen 78 in seiner Lage fixiert. Der Scharträger 73 und der Scharträgerkopf 73^{a} können auch dreiseitig anstatt wie dargestellt vierseitig sein. Dementsprechend ist das Gehäuse 74 dreiseitig pyramidenförmig. Das Gehäuse ist im hinteren Bereich 74^{a} als Führung für den Scharträgerkopf 73^{a} ausgebildet, so daß beim Zurückfahren des Scharträgerkopfes 73^{a} das vordere Ende des Scharträgers 73 mit dem Hebeschar 71 angehoben wird.

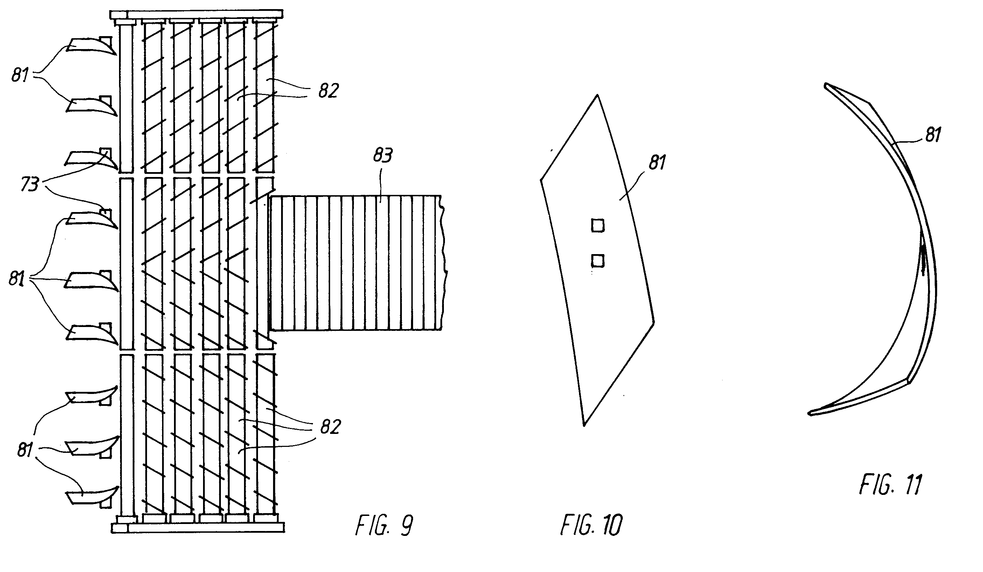

Die Figur 9 zeigt eine Ausführungsform des erfindungsgemäßen Rübenhebers, bei der die Hebeschare 81 nicht wie bisher eben ausgebildet sind, sondern in ihrer Längsrichtung gekrümmt und außerdem in Längsrichtung schraubenförmig gebogen sind. Die Rüben werden daher von den Scharen 81 zu der Seite abgelegt, zu der die Schare schraubenförmig gebogen sind. Bei der in Figur 9 gezeigten Ausführungsform sind drei 3er-Gruppen von Hebescharen 81 vorhanden, die auf jeweils eine Folge von Wendelwalzen 82 ablegen. Die äußeren Wendelwalzen sind von den mittleren Wendelwalzen getrennt und können zusammen mit ihren Hebescharen 81 vertikal hochgeklappt werden, so daß sich für die Fahrt auf einem öffentlichen Verkehrtweg eine geringere Breite ergibt. Die Wendelwalzen 82 fördern die Rüben zur Mitte. Die mittlere Reihe Wendelwalzen fördern die Rüben nach hinten auf das Förderband 83, an das sich Siebsterne (nicht dargestellt) anschließen können. Die in Figur 9 mittlere Folge 82 von Wendelwalzen kann auch fehlen. Stattdessen reicht das Förderband 83 soweit nach vorne, daß die mittlere Hebeschargruppe 81 direkt auf das Förderband 83 ablegt.

Aus den Figuren 10 und 11 ist die Ausbildung der gekrümmten und schraubenförmig gewundenen Hebeschare 81 ersichtlich.

## Patentansprüche

1. Rübenheber mit einem oder mehreren in Reihe nebeneinander angeordneten Hebewerkzeugen und einem Reinigungsteil mit mehreren Siebsternrosten, dadurch gekennzeichnet, daß jedes Hebewerkzeug aus einem unter einem Anstellwinkel in dem Bereich von 15 bis 50° zur Horizontalen geneigten Hebeschar (1) besteht, das unterseitig auf einem Scharträger (2) angebracht ist, der im druckentlasteten Schattenbereich des Hebeschars (1) aus dem Erdreich herausgeführt ist.

2. Rübenheber nach Anspruch 1, dadurch gekennzeichnet, daß sich an den Hebeschar (1) ein durch Hydraulikmotor (6) angetriebener Siebsternrost (5) anschließt, dessen Stäbe (5^{a},5^{c}) im Außenbereich in einer Ebene liegen und im Innenbereich aufgebogen sind.

3. Rübenheber nach Anspruch 1 oder 2, dadurch gekennzeichnet, daß der Anstellwinkel der Hebeschare (1) in dem Bereich von 20 bis 35° liegt.

4. Rübenheber nach Anspruch 2 oder 3, dadurch gekennzeichnet, daß die Stäbe (5^{c}) der Siebsternroste (5) im Innenbereich kegelförmig angeordnet sind.

5. Rübenheber nach Anspruch 4, dadurch gekennzeichnet, daß der Abbiegewinkel der Stäbe (5^{a},5^{c}) am Übergang vom Außenbereich zum Innenbereich in dem Bereich von 10 bis 60° liegt.

6. Rübenheber nach einem der Ansprüche 2 bis 5, dadurch gekennzeichnet, daß die Siebsternroste (5) paarweise in unterschiedlichen Drehrichtungen rotieren und sich im ebenen Außenbereich überlappen.

7. Rübenheber nach einem der Ansprüche 2 bis 6, dadurch gekennzeichnet, daß die Hydraulikmotoren (6) der Siebsternroste (5) durch nach oben weggeführte Halterungen (10) gehalten sind.

8. Rübenheber nach einem der Ansprüche 2 bis 7, dadurch gekennzeichnet, daß sich an den Siebsternrost (5) ein oder mehrere Siebsternroste (7) anschließen, deren Stäbe auf einer umgekehrten Kegelfläche angeordnet sind.

9. Rübenheber nach einem der Ansprüche 1 bis 8, dadurch gekennzeichnet, daß jedes Hebeschar (1) mit einer Überlastsicherung ausgestattet ist.

10. Rübenheber nach Anspruch 9, dadurch gekennzeichnet, daß der Scharträger (3) an zwei Punkten pendelnd aufgehängt ist und gegen einen druckeinstellbaren Gaszylinder (9) in der Arbeitsstellung gehalten wird.

11. Rübenheber nach Anspruch 9, dadurch gekennzeichnet, daß der Scharträger (3) in einer Führungstasche (11) in seiner Längsrichtung verschieblich geführt ist und gegen einen druckeinstellbaren Gaszylinder (9) in der Arbeitsstellung gehalten ist.

12. Rübenheber nach Anspruch 9, dadurch gekennzeichnet, daß der Scharträger (3) durch einen Scherbolzen in seiner Arbeitsstellung gehalten ist.

13. Rübenheber nach einem der Ansprüche 1 bis 12, dadurch gekennzeichnet, daß die Vorderkante des Hebeschars (1) in der Rodestellung unter, an oder neben der Spitze der Rübe (4) angeordnet ist.

14. Rübenheber nach einem der Ansprüche 1 bis 13, dadurch gekennzeichnet, daß die Stäbe (42) des Siebsterns (41) in ihrer gesamten Länge auf einer Kegelmantelfläche angeordnet sind, die sich zu der Seite des Siebsternantriebs (3) hin öffnet.

15. Rübenheber nach Anspruch 14, dadurch gekennzeichnet, daß der Neigungswinkel α des Kegelmantels zu der senkrecht zur Drehachse (44) stehenden Ebene (45) in dem Bereich von 0°C < α < 50°C liegt.

16. Rübenheber nach Anspruch 14 oder 15, dadurch gekennzeichnet, daß die Enden der gekrümmten Stäbe (42) des Siebsterns (41) unverbunden sind.

17. Rübenheber nach einem der Ansprüche 1 bis 16, dadurch gekennzeichnet, daß er eine oder mehrere Gruppen aus je zwei sich überlappenden Aufnahme-Siebsternen (55) hat, vor denen je ein Hebeschar (51) angeordnet ist, und daß in dem Zwickel (58) vor dem Überlappungsbereich der beiden Aufnahme-Siebsterne (55) ein drittes Hebeschar (51^{a}) angeordnet ist.

18. Rübenheber nach Anspruch 17, dadurch gekennzeichnet, daß alle drei Hebeschare (51,51^{a}) jeder Gruppe unter einem Anstellwinkel in dem Bereich von 15 bis 50° zur Horizontalen geneigt sind und jedes Hebeschar (51,51^{a}) unterseitig auf einem Scharträger (53) angebracht ist, der im druckentlasteten Schattenbereich des Hebeschars aus dem Erdreich (52) herausgeführt ist.

19. Rübenheber nach Anspruch 17 oder 18, dadurch gekennzeichnet, daß die vor den Aufnahme-Siebsternen (55) angeordneten Hebeschare (51,51^{a}) in Querrichtung verstellbar sind.

20. Rübenheber nach Anspruch 18 oder 19, dadurch gekennzeichnet, daß wenigstens die Scharträger (53) der beiden äußeren Hebeschare (51) an ihren hinteren Enden durch ein Doppelgestänge (62) an je einer Schiebebuchse (61) aufgehängt sind, die auf einem Querholm (60) verschiebbar und auf ihm feststellbar ist.

21. Rübenheber nach Anspruch 20, dadurch gekennzeichnet, daß der Querholm (60) hinter dem Reinigungsteil angeordnet ist.

22. Rübenheber nach Anspruch 20 oder 21, dadurch gekennzeichnet, daß jeder Scharträger (53) oder sein Doppelgestänge (62) durch einen druckeinstellbaren Strömungsmittelzylinder (64) in der Rodestellung abgestützt ist.

23. Rübenheber nach einem der Ansprüche 17 bis 22, dadurch gekennzeichnet, daß jede Gruppe aus den drei Hebescharen (51,51^{a}) und zwei Aufnahme-Siebsternen (55) durch vier auf dem Erdboden (52) laufende Tasträder (59) tiefenmäßig individuell geführt sind.

24. Rübenheber nach einem der Ansprüche 17 bis 23, dadurch gekennzeichnet, daß jede Gruppe aus den drei Hebescharen (51,51^{a}) und zwei Aufnahme-Siebsternen (55) durch Schleifkufen tiefenmäßig individuell geführt sind.

25. Rübenheber nach einem der Ansprüche 1 bis 9, dadurch gekennzeichnet, daß an dem hinteren Ende des Scharträgers (73) ein pyramidenförmiger Kopf (73^{a}) ausgebildet ist, der in Rodestellung des Hebeschars (71) in einem pyramidenförmigen, sich nach hinten öffnenden Gehäuse (74) allseitig anliegend gehalten ist, und daß der Scharträgerkopf (73^{a}) durch ein nachgiebiges Rückstellmittel (75) in dieser Anlagestellung abgestützt ist.

26. Rübenheber nach Anspruch 25, dadurch gekennzeichnet, daß das Rückstellmittel (75) ein mit Strömungsmittel gefüllter Faltenbalg ist.

27. Rübenheber nach Anspruch 25 oder 26, dadurch gekennzeichnet, daß das Hebeschar (71) auf der Oberseite des Scharträgers (73) schwenkbar angelenkt und durch einen Scherbolzen (78) in seiner Lage fixiert ist.

28. Rübenheber nach einem der Ansprüche 1 bis 27, dadurch gekennzeichnet, daß das Hebeschar (81) aus einer gekrümmten und schraubenförmig gebogenen Platte besteht, so daß die Rübe von dem Hebeschar schräg zur Seite abgelegt wird.

29. Rübenheber nach Anspruch 28, dadurch gekennzeichnet, daß die Hebeschare (81) in Gruppen angeordnet sind und die Hebeschare einer Gruppe in der gleichen Richtung schraubenförmig gebogen sind, so daß sie die Rüben zur gleichen Seite ablegen.
